# FASCICULE DE BREVET EUROPEEN

(11) **EP 3 205 552 B1**
(45) Date de publication et mention de la délivrance du brevet: **01.04.2020**
(21) Numéro de dépôt: 17156310.9
(22) Date de dépôt: 15.02.2017
(51) Int. Cl.: B61L 3/00, B61L 15/00

(54) **DISPOSITIF D'AIDE A LA CONDUITE POUR UN VEHICULE FERROVIAIRE, COMPRENANT DES MOYENS PROGRESSIFS D'INDICATION D'INSTRUCTIONS**
FAHRERASSISTENZVORRICHTUNG FÜR EIN SCHIENENFAHRZEUG, DIE PROGRESSIVE ANZEIGEMITTEL FÜR ANWEISUNGEN UMFASST
A DRIVING ASSISTANCE DEVICE FOR A RAILWAY VEHICULE, COMPRISING PROGRESSIVE MEANS FOR INDICATING INSTRUCTIONS

(30) Priorité: 15.02.2016 FR 1651208
(43) Date de publication de la demande: 16.08.2017
(73) Titulaire: ALSTOM Transport Technologies, 93400 Saint-Ouen (FR); Université de Valenciennes et du Hainaut Cambrésis, 59313 Valenciennes (FR); Railenium, 59300 Famars (FR)
(72) Inventeur: MIGLIANICO, Denis, 75009 Paris (FR); ENJALBERT, Simon, 59880 Saint Saulve (FR); MOUCHEL, Mathieu, 59141 Iwuy (FR); DAHYOT, Rudy, 59540 Caudry (FR); MOYART, Luc, 59110 La Madeleine (FR); VANDERHAEGEN, Frédéric, 59300 Valenciennes (FR)
(74) Mandataire: Lavoix

(56) Documents cités:
- EP-A1- 2 466 361
- EP-A2- 2 374 687
- WO-A2-2010/149715
- DE-A1-102012 204 120
- DE-B- 1 159 496
- US-A1- 2011 309 920
- US-B1- 8 509 971
- ANDREW RODEN: "Heads up !", INTERNATIONAL RAILWAY JOURNAL, SIMMONS-BOARDMAN PUBLISHING CORP, UNITED STATES, 1 janvier 2008 (2008-01-01), pages 30-31, XP001537933, ISSN: 0744-5326

## Description

La présente invention concerne un dispositif d'aide à la conduite pour un véhicule ferroviaire.

La consommation d'énergie d'un véhicule ferroviaire est directement liée à la vitesse de celui-ci. Ainsi, il existe des méthodes de détermination d'une vitesse optimale pour le véhicule ferroviaire, permettant de minimiser la consommation d'énergie de ce véhicule, tout en répondant aux exigences d'horaires qu'un véhicule ferroviaire doit habituellement respecter.

On connaît déjà, dans l'état de la technique, un dispositif d'aide à la conduite pour un véhicule ferroviaire, comportant des moyens de détermination d'une telle vitesse optimale. Le dispositif d'aide à la conduite comporte par ailleurs des moyens pour indiquer cette vitesse optimale au conducteur, afin qu'il la prenne en compte lorsqu'il conduit le véhicule.

Les documents US 8,509,971 B1 et WO 2010/149715 A2 divulguent des interfaces d'utilisateur pour véhicules ferroviaires indiquant la différence entre la vitesse actuelle et la vitesse cible.

L'invention a notamment pour but d'améliorer un tel dispositif d'aide à la conduite, notamment en facilitant son utilisation pour le conducteur.

A cet effet, l'invention a notamment pour objet un dispositif d'aide à la conduite pour un véhicule ferroviaire, comprenant des moyens de détermination d'une vitesse cible, caractérisé en ce qu'il comporte :
- des moyens de comparaison d'une vitesse instantanée du véhicule ferroviaire avec la vitesse cible ou avec un intervalle entourant la vitesse cible, et
- des moyens progressifs d'indication d'instructions de conduite à destination d'un conducteur du véhicule ferroviaire, lesdites instructions de conduite comportant des instructions de modification de la vitesse instantanée en vue de l'approcher de la vitesse cible, les moyens d'indication étant conformés pour :
- indiquer une instruction d'augmentation de la vitesse lorsque la vitesse instantanée est inférieure à une première valeur prédéfinie, l'instruction d'augmentation de la vitesse comportant un indicateur de valeur variable en fonction de la différence entre la vitesse instantanée et la vitesse cible,
- indiquer une instruction de réduction de la vitesse lorsque la vitesse instantanée est supérieure à une seconde valeur prédéfinie, l'instruction de réduction de la vitesse comportant un indicateur de valeur variable en fonction de la différence entre la vitesse instantanée et la vitesse cible, et
- indiquer une instruction de maintien de la vitesse lorsque la vitesse instantanée est comprise entre la première et la seconde valeurs prédéfinies,
et en ce que les moyens d'indication comportent un panneau d'affichage, propre à afficher les instructions de conduite, ou un dispositif d'affichage tête haute, propre à afficher les instructions de conduite dans un champ de vision du conducteur,
et dans lequel les moyens d'indication sont configurés pour :
- afficher un pictogramme d'instruction d'augmentation de la vitesse lorsque la vitesse instantanée est inférieure à une première valeur prédéfinie, le pictogramme d'instruction d'augmentation de la vitesse comprenant l'indicateur de valeur variable, formé par un élément de hauteur variable en fonction de la différence entre la vitesse instantanée et la vitesse cible, et
- afficher un pictogramme d'instruction de réduction de la vitesse lorsque la vitesse instantanée est supérieure à une seconde valeur prédéfinie, le pictogramme d'instruction de réduction de la vitesse comprenant l'indicateur de valeur variable, formé par un élément de hauteur variable en fonction de la différence entre la vitesse instantanée et la vitesse cible.

Un dispositif d'aide à la conduite selon l'invention peut comporter en outre l'une ou plusieurs des caractéristiques suivantes, prises seules ou selon toutes combinaisons techniquement envisageables.
- Les moyens de comparaison comparent la vitesse instantanée avec un intervalle entourant la vitesse cible, délimité par les première et seconde valeurs prédéfinies, et les moyens d'indication d'instructions de conduite sont configurés pour : - afficher le pictogramme d'instruction d'augmentation de la vitesse lorsque la vitesse instantanée est en dessous de l'intervalle, - afficher le pictogramme d'instruction de réduction de la vitesse lorsque la vitesse instantanée est au-dessus de l'intervalle, - afficher un pictogramme d'instruction de maintien de la vitesse lorsque la vitesse instantanée se trouve dans l'intervalle.
- Les moyens d'indication sont configurés pour que : - le pictogramme d'instruction d'augmentation de la vitesse présente une première couleur, - le pictogramme d'instruction de maintien de la vitesse présente une seconde couleur différente de la première, - le pictogramme d'instruction de réduction de la vitesse présente une troisième couleur, différente de la seconde, et de préférence différente de la première.
- Les moyens d'indication sont configurés pour que : - le pictogramme d'instruction d'augmentation de la vitesse comporte une flèche orientée vers le haut, et - le pictogramme d'instruction de réduction de la vitesse comporte une flèche orientée vers le bas.
- Les moyens d'indication sont configurés pour que : lorsque le pictogramme d'instruction d'augmentation de la vitesse est affiché, l'indicateur de valeur variable est la flèche orientée vers le haut, la longueur de la flèche dépendant de la différence entre la vitesse instantanée et la vitesse cible, et lorsque le pictogramme d'instruction de réduction de la vitesse est affiché, l'indicateur de valeur variable est la flèche orientée vers le bas, la longueur de la flèche dépendant de la différence entre la vitesse instantanée et la vitesse cible.
- Les moyens d'indication sont configurés pour que : le pictogramme d'instruction d'augmentation de la vitesse comporte une jauge de vitesse, affichant la vitesse instantanée et la vitesse cible, l'indicateur de valeur variable étant la distance entre la vitesse instantanée et la vitesse cible affichées,
- le pictogramme d'instruction de réduction de la vitesse comporte une jauge de vitesse, affichant la vitesse instantanée et la vitesse cible, l'indicateur de valeur variable étant la distance entre la vitesse instantanée et la vitesse cible affichées.
- Les moyens d'indication comportent des moyens haptiques agissant sur un levier de commande de traction/freinage du véhicule ferroviaire, l'indicateur de valeur variable étant l'effort de résistance transmis par les moyens haptiques.
- Les moyens de comparaison comparent également la vitesse instantanée avec une vitesse maximale, et les moyens d'indication d'instructions de conduite sont configurés pour indiquer une instruction impérative de réduction de la vitesse lorsque la vitesse instantanée est supérieure à la vitesse maximale.

L'invention concerne également un procédé d'aide à la conduite d'un véhicule ferroviaire, à l'aide d'un dispositif d'aide à la conduite tel que défini précédemment, caractérisé en ce qu'il comporte :
- une étape de détermination d'une vitesse cible,
- une étape de comparaison d'une vitesse instantanée du véhicule ferroviaire avec la vitesse cible ou un intervalle entourant la vitesse cible, et
- une étape d'indication d'instruction de conduite à destination d'un conducteur du véhicule ferroviaire, lesdites instructions de conduite comportant des instructions de modification de la vitesse instantanée en vue de l'approcher de la vitesse cible, de sorte que :
   - lorsque la vitesse instantanée est inférieure à une première valeur prédéfinie, on indique une instruction d'augmentation de la vitesse, l'instruction d'augmentation de la vitesse comportant un indicateur de valeur variable en fonction de la différence entre la vitesse instantanée et la vitesse cible,
   - lorsque la vitesse instantanée est supérieure à une seconde valeur prédéfinie, on indique une instruction de réduction de la vitesse, l'instruction de réduction de la vitesse comportant un indicateur de valeur variable en fonction de la différence entre la vitesse instantanée et la vitesse cible, et
- lorsque la vitesse instantanée est comprise entre la première et la seconde valeurs prédéfinies, on indique une instruction de maintien de la vitesse.

L'invention sera mieux comprise à la lecture de la description qui va suivre, donnée uniquement à titre d'exemple et faite en se référant aux figures annexées parmi lesquelles :
- la figure 1 représente schématiquement un dispositif d'aide à la conduite selon un exemple de mode de réalisation de l'invention ;
- les figures 2 à 5 représentent des pictogrammes d'instruction de conduite, respectivement dans quatre situations distinctes, affichées par des moyens d'affichage du dispositif d'aide à la conduite de la figure 1 ; et
- les figures 6 à 11 représentent des pictogrammes d'instruction de conduite selon une variante de réalisation, respectivement dans six situations distinctes, affichées par des moyens d'affichage du dispositif de la figure 1.

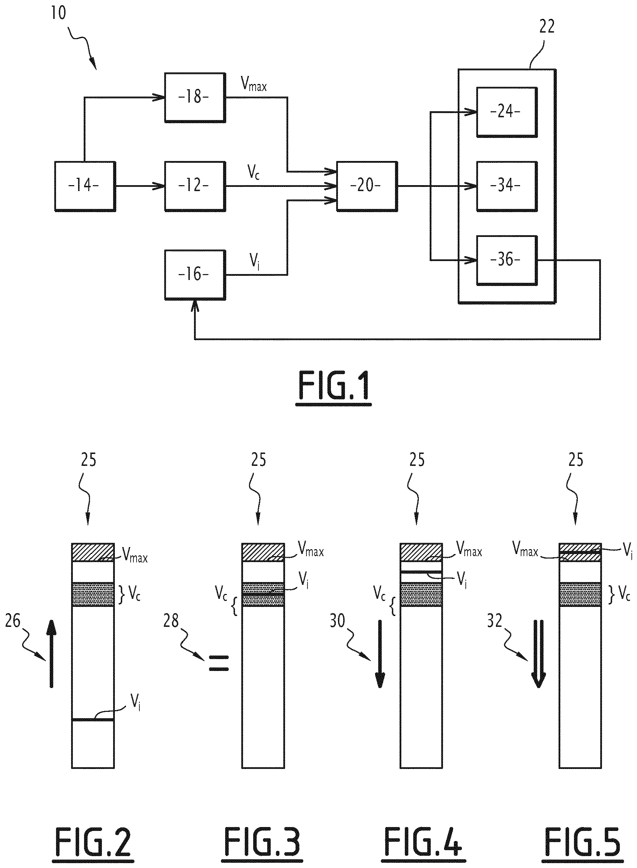

On a représenté, sur la figure 1, un dispositif 10 d'aide à la conduite, destiné à équiper un véhicule ferroviaire.

Un véhicule ferroviaire étant destiné à circuler sur une voie ferrée, il suit un parcours prédéfini, si bien qu'il est possible de prévoir une vitesse optimale de déplacement du véhicule ferroviaire, notamment afin de minimiser la consommation d'énergie du véhicule, tout en prenant en compte les horaires que doit respecter ce véhicule.

Plus particulièrement, la voie ferrée peut être découpée en une pluralité de tronçons de voie, une vitesse optimale pouvant être définie sur chaque tronçon. En effet, la vitesse optimale est habituellement différente en fonction du tronçon sur lequel se trouve le véhicule ferroviaire, notamment en fonction du fait que le tronçon est en ligne droite ou en courbe, en descente ou en montée, etc. La longueur d'un tronçon de voie est choisie lors de la configuration du dispositif d'aide à la conduite 10, et peut être quelconque. On peut également prévoir divers tronçons de voie de longueurs différentes.

Ainsi, le dispositif d'aide à la conduite 10 selon l'invention comporte des moyens 12 de détermination d'une vitesse cible V_{c}, correspondant par exemple à une vitesse optimale permettant de limiter la consommation d'énergie du véhicule ferroviaire.

Comme indiqué précédemment, la vitesse optimale dépend du tronçon de voie sur lequel se trouve le véhicule ferroviaire, si bien qu'il est nécessaire de pouvoir déterminer sur quel tronçon de voie le véhicule ferroviaire se trouve. A cet effet, le dispositif d'aide à la conduite 10 comporte avantageusement des moyens de localisation 14, par exemple un dispositif de guidage par satellite.

Les moyens de détermination 12 peuvent être de tout type envisageable.

Conformément à un premier exemple, ces moyens de détermination 12 sont formés par une mémoire dans laquelle est stockée, pour chaque tronçon de voie, une vitesse cible V_{c} (notamment une vitesse optimale) prédéterminée correspondant à ce tronçon de voie. Ainsi, à tout moment, les moyens de localisation 14 permettent de déterminer sur quel tronçon de voie se trouve le véhicule ferroviaire, et les moyens de détermination 12 en déduisent la vitesse cible V_{c}.

Chaque vitesse cible V_{c} prédéterminée est calculée préalablement, en prenant en compte la consommation d'énergie du véhicule ferroviaire et les horaires devant être respectée par ce véhicule ferroviaire. D'autres caractéristiques peuvent être prises en compte pour la détermination de la vitesse cible V_{c}, notamment des caractéristiques du véhicule (telles que son nombre de voitures et sa longueur), des caractéristiques du tronçon de voie considéré (notamment s'il comporte au moins une montée et/ou au moins une descente, s'il est en ligne droite et s'il comporte des courbes, auquel cas les rayons de courbure de ces courbes peut également être pris en compte) et des conditions environnementales (par exemple la saison).

Conformément à un second exemple, les moyens de détermination 12 comportent des moyens de calcul en temps réel de la vitesse cible V_{c}, comprenant un algorithme de calcul déterminant la vitesse cible V_{c} en fonction des caractéristiques évoquées précédemment. De tels moyens de calcul en temps réel peuvent également prendre en compte un éventuel retard ou une avance sur les horaires que doit respecter le véhicule ferroviaire.

Conformément à un troisième exemple, les moyens de détermination 12 comportent des moyens d'apprentissage. Dans ce cas, lorsque le véhicule ferroviaire parcourt la voie ferrée, les moyens d'apprentissage enregistrent à chaque trajet la vitesse du véhicule ferroviaire sur chaque tronçon de voie considéré. Ensuite, au cours des trajets ultérieurs, les moyens d'apprentissage choisissent, sur chaque tronçon de voie, la vitesse qui semble la plus adaptée parmi celles enregistrées sur ce tronçon, cette vitesse la plus adaptée formant alors la vitesse cible V_{c}.

Le dispositif d'aide à la conduite 10 comporte par ailleurs des moyens classiques de commande de niveau de traction 16, généralement formés par un levier de commande de traction / freinage. Ce levier de commande 16 est actionné par le conducteur du véhicule ferroviaire, pour appliquer à ce véhicule ferroviaire un niveau de traction ou de freinage permettant de modifier la vitesse instantanée Vᵢ, souhaitée par le conducteur, en vue de l'approcher de la vitesse cible V_{c}.

Le dispositif d'aide à la conduite comporte également des moyens 18 de détermination d'une vitesse maximale Vₘₐₓ, en fonction du tronçon de voie sur lequel se trouve le véhicule ferroviaire.

Ces moyens 18 de détermination de vitesse maximale Vₘₐₓ sont liés aux moyens de localisation 14 indiquant sur quel tronçon de voie se trouve le véhicule ferroviaire, pour que les moyens 18 de détermination de vitesse maximale en déduisent quelle est la vitesse maximale Vₘₐₓ autorisée pour le véhicule ferroviaire.

Les moyens 18 de détermination de vitesse maximale comportent par exemple une base de données dans laquelle une vitesse maximale Vₘₐₓ prédéterminée respective est renseignée pour chaque tronçon de voie.

En variante, la vitesse maximale Vₘₐₓ pourrait être fournie en temps réel par un centre de commande centralisé, ou par des bornes disposées le long de la voie ferrée.

Le dispositif d'aide à la conduite 10 comporte par ailleurs des moyens 20 de comparaison de la vitesse instantanée Vᵢ du véhicule ferroviaire, dépendant des moyens de commande 16, avec la vitesse cible V_{c} renseignée par les moyens de détermination 12. Avantageusement, un intervalle de vitesse cible est défini autour de la vitesse cible V_{c}, et les moyens de comparaison 20 comparent la vitesse instantanée Vᵢ avec cet intervalle de vitesse cible. Cet intervalle est délimité par une première vitesse inférieure à la vitesse cible V_{c} et une seconde vitesse supérieure à la vitesse cible V_{c}.

Les première et seconde vitesses sont donc prédéterminées en fonction de la vitesse cible V_{c}. Ainsi, ces première et seconde vitesses sont déterminées dynamiquement, en soustrayant, respectivement ajoutant, une valeur prédéfinie à la vitesse cible V_{c}, ou en variante en appliquant un pourcentage à cette vitesse cible V_{c}.

En variante, les première et seconde vitesses sont identiques, égales à la vitesse cible V_{c}.

Avantageusement, ces moyens de comparaison 20 comparent également la vitesse instantanée V_{I} avec la vitesse maximale Vₘₐₓ renseignée par les moyens de détermination 18.

Ces moyens de comparaison 20 fournissent les résultats des comparaisons à des moyens 22 progressifs d'indication d'instructions de conduite à destination du conducteur du véhicule ferroviaire.

Ces instructions de conduite comportent notamment des instructions de modification de la vitesse instantanée Vᵢ en vue de l'approcher de la vitesse cible V_{c}, notamment une instruction d'augmentation de la vitesse lorsque la vitesse instantanée Vᵢ est inférieure à la vitesse cible V_{c}, une instruction de réduction de la vitesse lorsque la vitesse instantanée Vᵢ est supérieure à la vitesse cible V_{c}, et une instruction de maintien de vitesse lorsque la vitesse instantanée Vᵢ est sensiblement égale à la vitesse cible V_{c}.

Les instructions d'augmentation et de réduction de la vitesse comprennent chacune au moins un indicateur de valeur variable en fonction de la différence entre la vitesse instantanée Vᵢ et la vitesse cible V_{c}

Les moyens progressifs d'indication 22 peuvent comporter différents dispositifs d'affichage envisageables.

Par exemple, les moyens progressifs d'indication 22 comportent un panneau d'affichage 24, notamment un écran d'affichage, propre à afficher des instructions de conduite, sous forme de pictogrammes d'instruction de conduite.

En variante ou de manière complémentaire, les moyens d'indication 22 comportent un dispositif d'affichage tête haute 34, propre à afficher les instructions de conduite dans un champ de vision du conducteur. Un tel dispositif d'affichage tête haute 34 est connu en soi et ne sera donc pas décrit plus en détail.

Dans ces cas, les moyens progressifs d'indication 22 sont configurés pour :
- afficher un pictogramme d'instruction d'augmentation de la vitesse lorsque la vitesse instantanée Vᵢ est en dessous de l'intervalle de vitesse cible V_{c}, c'est-à-dire en dessous la première vitesse prédéterminée,
- afficher un pictogramme d'instruction de réduction de la vitesse lorsque la vitesse instantanée Vᵢ est au-dessus de l'intervalle de vitesse cible V_{c}, c'est-à-dire au-dessus de la seconde vitesse prédéterminée, et
- afficher un pictogramme d'instruction de maintien de la vitesse lorsque la vitesse instantanée Vᵢ se trouve dans l'intervalle de vitesse cible V_{c}.

Par ailleurs, lorsque la vitesse instantanée Vᵢ est supérieure à la vitesse maximale Vₘₐₓ, les moyens d'indication 22 indiquent une instruction impérative de réduction de la vitesse.

Avantageusement, les moyens d'indication 22 indiquent également les valeurs de la vitesse instantanée Vᵢ, de la vitesse cible V_{c}, et de la vitesse maximale Vₘₐₓ.

Chaque pictogramme d'instruction de conduite comporte un indicateur de valeur variable, notamment un élément de taille variable, par exemple une jauge de vitesse 25, comme cela est représenté sur les figures 2 à 5.

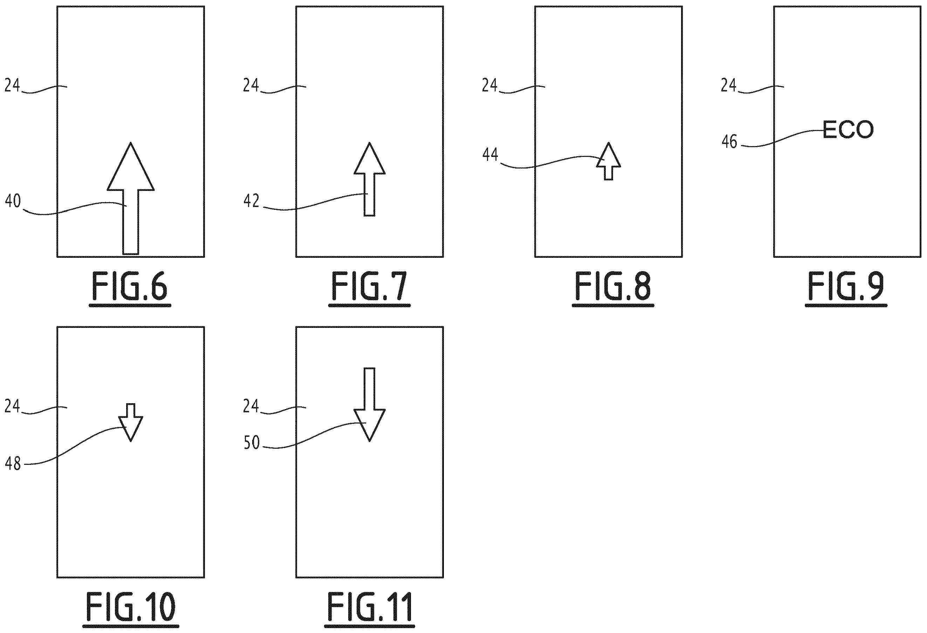

En variante, comme cela est représenté sur les figures 6 à 11, chaque pictogramme d'instruction comporte une flèche de taille variable en fonction des instructions de modification de la vitesse instantanée Vᵢ en vue de l'approcher de la vitesse cible V_{c}.

Les pictogrammes d'instruction affichés par le dispositif d'affichage tête haute 34 sont par exemple identiques à ceux affichés par le panneau d'affichage 24, et comportent une jauge de vitesse 25 telle que représentée sur les figures 2 à 5, et/ou des flèches telles que représentées sur les figures 6 à 11.

On a représenté, sur les figures 2 à 5, la jauge de vitesse 25 affichée par les moyens d'indication 22, notamment par le panneau d'affichage 24 et/ou le dispositif d'affichage tête haute 34, dans différentes situations respectives. Cette jauge de vitesse 25 comporte un premier trait représentant la vitesse instantanée Vᵢ, et un second trait représentant la vitesse cible V_{c}. Dans ce cas, l'indicateur de valeur variable est la distance entre le premier et le second trait.

Sur la figure 2, la vitesse instantanée Vᵢ est inférieure à l'intervalle de vitesse cible V_{c}, si bien que les moyens d'indication 22 affichent un pictogramme d'instruction d'augmentation de la vitesse, comprenant une flèche 26 dirigée vers le haut.

En variante, ou de manière complémentaire, la jauge de vitesse 25 est affichée avec une première couleur, par exemple en jaune, lorsque la vitesse instantanée Vᵢ est inférieure à l'intervalle de vitesse cible V_{c}. Ainsi, le conducteur est invité à agir sur les moyens de commande 16 de manière à modifier le niveau de traction afin de respecter l'instruction d'augmentation de la vitesse.

On a représenté sur la figure 3 la jauge de vitesse 25 lorsque la vitesse instantanée Vᵢ se trouve dans l'intervalle de vitesse cible V_{c}. Dans ce cas, les moyens d'indication 22 affichent un pictogramme d'instruction de maintien de la vitesse. Ce pictogramme d'instruction de maintien de la vitesse comporte par exemple un symbole « égal » 28.

En variante, le pictogramme d'instruction peut ne comporter que la jauge de vitesse 25, l'indication de maintien de la vitesse étant alors matérialisée par une absence d'instruction de modification de vitesse. De la même manière que précédemment, on peut prévoir un code de couleur pour indiquer l'instruction de maintien de vitesse, en affichant la jauge de vitesse 25 avec une seconde couleur différente de la première, par exemple en vert, lorsque la vitesse instantanée Vᵢ se trouve dans l'intervalle de vitesse cible V_{c}.

On a représenté sur la figure 4 la jauge de vitesse 25 lorsque la vitesse instantanée Vᵢ est supérieure à l'intervalle de vitesse cible V_{c}. Dans ce cas, les moyens d'indication 22 affichent un pictogramme d'instruction de réduction de la vitesse, par exemple comportant une flèche descendante 30. En variante ou de manière complémentaire, la couleur de la jauge de vitesse 25 peut être modifiée, et prend une troisième couleur, distincte de la seconde couleur, et distincte de la première couleur, par exemple orange, pour indiquer que la vitesse instantanée Vᵢ est supérieure à l'intervalle de vitesse cible V_{c}. En variante, la troisième couleur est identique à la première couleur.

On a représenté sur la figure 5 la jauge de vitesse lorsque la vitesse instantanée Vᵢ est supérieure à la vitesse maximale Vₘₐₓ. Dans ce cas, les moyens d'indication 22 affichent un pictogramme d'instruction impérative de réduction de vitesse, par exemple comportant une double flèche descendante 32, ou en variante une flèche descendante identique à la flèche descendante 30. En variante ou de manière complémentaire, la jauge de vitesse peut prendre une quatrième couleur, distincte des première, seconde et troisième couleurs, par exemple le rouge, pour indiquer que la vitesse instantanée Vᵢ est supérieure à la vitesse maximale Vₘₐₓ.

On a représenté, sur les figures 6 à 11, des pictogrammes d'instruction affichés par les moyens d'indication 22, notamment par le panneau d'affichage 24 et/ou le dispositif d'affichage tête haute 34, dans différentes situations respectives.

Dans ce cas, l'indicateur de valeur variable est formé par la flèche affichée, dont la hauteur est variable en fonction de la différence entre la vitesse instantanée Vᵢ et la vitesse cible V_{c}.

Sur la figure 6, la vitesse instantanée Vᵢ est inférieure et éloignée de l'intervalle de vitesse cible V_{c}, si bien que les moyens d'indication 22 affichent un pictogramme d'instruction d'augmentation de la vitesse, comportant une flèche 40 de grande taille, dirigée vers le haut. La flèche 40 présente de préférence une première couleur, par exemple jaune. Ainsi, le conducteur est invité à agir sur les moyens de commande 16 de manière à modifier le niveau de traction afin de respecter l'instruction d'augmentation de la vitesse.

Comme cela est représenté sur la figure 7, lorsque la vitesse instantanée Vᵢ se rapproche de la vitesse cible V_{c}, tout en restant inférieure à cette vitesse cible V_{c}, les moyens d'indication 22 affichent un pictogramme d'instruction d'augmentation de la vitesse, comportant une flèche 42 de taille moyenne, dirigée vers le haut, par exemple de couleur jaune. Le conducteur est ainsi inviter à continuer l'accélération.

Comme cela est représenté sur la figure 8, lorsque la vitesse instantanée Vᵢ est proche de l'intervalle de vitesse cible V_{c}, tout en restant inférieure à cette vitesse cible V_{c}, les moyens d'indication 22 affichent un pictogramme d'instruction d'augmentation de la vitesse, comportant une flèche 44 de petite taille, dirigée vers le haut, par exemple de couleur jaune. Le conducteur est ainsi inviter à réduire l'effort en traction.

Comme cela est représenté sur la figure 9, lorsque la vitesse instantanée Vᵢ se trouve dans l'intervalle de vitesse cible V_{c}, les moyens d'indication 22 affichent un pictogramme d'instruction de maintien de la vitesse, comportant une image 46 symbolisant le maintien de la vitesse, par exemple un symbole « égal » ou un message, notamment « ECO » indiquant qu'on a atteint à une vitesse économique. De la même manière que précédemment, on peut prévoir un code de couleur pour indiquer l'instruction de maintien de vitesse, en affichant ce pictogramme d'instruction avec une seconde couleur différente de la première, par exemple en vert.

Comme cela est représenté sur la figure 10, lorsque la vitesse instantanée Vᵢ est légèrement supérieure à l'intervalle de vitesse cible V_{c}, les moyens d'indication 22 affichent un pictogramme d'instruction de réduction de la vitesse, par exemple comportant une flèche descendante de petite taille 48. Le conducteur est ainsi invité à réduire la vitesse instantanée Vᵢ.

En variante ou de manière complémentaire, la couleur de flèche 48 peut être modifiée, et prend une troisième couleur, distincte de la seconde couleur, et distincte de la première couleur, par exemple orange, pour indiquer que la vitesse instantanée Vᵢ est supérieure à l'intervalle de vitesse cible V_{c}. En variante, la troisième couleur est identique à la première couleur.

Si la vitesse instantanée Vᵢ augmente encore, les moyens d'indication 22 affichent un pictogramme d'instruction de réduction de la vitesse, par exemple comportant une flèche descendante de taille moyenne 50, comme cela est représenté sur la figure 11. Le conducteur est ainsi invité à réduire la vitesse instantanée Vᵢ.

La flèche descendante 50 peut présenter une autre couleur, par exemple rouge, lorsque la vitesse instantanée Vᵢ est supérieure à la vitesse maximale Vₘₐₓ.

On notera que la taille de la flèche ascendante 40, 42, 44 ou descendante 48, 50 dépend de la différence entre la vitesse instantanée Vᵢ et la vitesse cible V_{c}. Ceci permet au conducteur de savoir s'il se rapproche de la vitesse cible V_{c}.

En variante, ou de manière complémentaire, les moyens d'indication 22 comportent des moyens haptiques 36 agissant sur le levier 16 de commande de traction / freinage du véhicule ferroviaire. De tels moyens haptiques 36 (ou tactilo-kinesthésiques) sont destinés à modifier le ressenti haptique du conducteur lorsqu'il actionne le levier de commande 16.

Les moyens haptiques 36 peuvent également être utilisés pour actionner le levier de commande afin de le rappeler vers une position neutre comme le ferait un ressort. Par exemple, les moyens haptiques 36 sont formés par un moteur qui interagit avec l'axe du levier de commande. Ce moteur est par exemple de type sans contact ou sans balai (« brushless » en anglais). Cette caractéristique permet de répondre aux besoins de plusieurs modes de conduite de matériels roulants : tram, métro, train régional, train à grande vitesse, locomotive.

Lorsque la vitesse instantanée Vᵢ est inférieure à la vitesse cible V_{c}, les efforts de résistance transmis par les moyens haptiques 36 correspondent à une première gamme de résistances prédéterminée, dans laquelle les efforts de résistance sont alors réduits pour correspondre aux efforts équivalents d'un manipulateur classique.

Lorsque la vitesse instantanée Vᵢ est supérieure à la vitesse cible V_{c}, les efforts de résistance transmis par les moyens haptiques 36 correspondent à une seconde gamme de résistances prédéterminé, dans laquelle les efforts de résistance sont supérieurs à ceux de la première gamme, les efforts de résistance étant ainsi augmentés pour passer de la première gamme à la seconde gamme, puis maintenus à un effort de résistance plus important que les efforts équivalents d'un manipulateur classique. En ressentant ce changement de résistance, le conducteur est incité à ne pas dépasser le niveau de traction recommandé.

Dans ce cas, l'indicateur de valeur variable est l'effort de résistance transmis par les moyens haptiques, cet effort diminuant au fur et à mesure que la vitesse instantanée Vᵢ se rapproche de la vitesse cible V_{c} lorsque la vitesse instantanée Vᵢ est inférieure à la vitesse cible V_{c}, et augmentant au fur et à mesure que la vitesse instantanée Vᵢ s'éloigne de la vitesse cible V_{c} lorsque la vitesse instantanée Vᵢ est supérieure à la vitesse cible V_{c}.

Le dispositif d'aide à la conduite 10 permet de réaliser un procédé d'aide à la conduite, comportant les étapes suivantes :
- une étape de détermination d'une vitesse cible V_{c} (par les moyens de détermination 12),
- une étape de comparaison d'une vitesse instantanée Vᵢ du véhicule ferroviaire avec la vitesse cible V_{c} (par les moyens de comparaison 20), et
- une étape d'affichage (par les moyens d'affichage 22) d'un pictogramme d'instruction de conduite à destination d'un conducteur du véhicule ferroviaire, lesdites instructions de conduite comportant des instructions de modification de la vitesse instantanée Vᵢ en vue de l'approcher de la vitesse cible V_{c}, de sorte que :
   - lorsque la vitesse instantanée Vᵢ est inférieure à une première valeur prédéfinie, une instruction d'augmentation de la vitesse est indiquée,
   - lorsque la vitesse instantanée Vᵢ est supérieure à une seconde valeur prédéfinie, une instruction de réduction de la vitesse est indiquée, et
   - lorsque la vitesse instantanée Vᵢ est comprise entre la première et la seconde vitesse, une instruction de maintien de la vitesse est indiquée.

On notera que l'invention n'est pas limitée au mode de réalisation précédemment décrit, mais pourrait présenter diverses variantes.

En particulier, la vitesse cible pourrait être déterminée avec d'autres critères que la vitesse optimale évoquée précédemment. Par exemple, la vitesse cible pourrait prendre en compte uniquement les horaires à respecter, ou uniquement la consommation d'énergie.

## Revendications

1. Dispositif (10) d'aide à la conduite pour un véhicule ferroviaire, comprenant des moyens (12) de détermination d'une vitesse cible (V_{c}), qui comporte :
- des moyens (20) de comparaison d'une vitesse instantanée (Vᵢ) du véhicule ferroviaire avec la vitesse cible (V_{c}) ou avec un intervalle entourant la vitesse cible, et
- des moyens (22) progressifs d'indication d'instructions de conduite à destination d'un conducteur du véhicule ferroviaire, lesdites instructions de conduite comportant des instructions (25, 26, 28, 30) de modification de la vitesse instantanée (Vᵢ) en vue de l'approcher de la vitesse cible (V_{c}), les moyens d'indication étant conformés pour :
- indiquer une instruction d'augmentation de la vitesse lorsque la vitesse instantanée (Vᵢ) est inférieure à une première valeur prédéfinie, l'instruction d'augmentation de la vitesse comportant un indicateur de valeur variable en fonction de la différence entre la vitesse instantanée (Vᵢ) et la vitesse cible (V_{c}),
- indiquer une instruction de réduction de la vitesse lorsque la vitesse instantanée (Vᵢ) est supérieure à une seconde valeur prédéfinie, l'instruction de réduction de la vitesse comportant un indicateur de valeur variable en fonction de la différence entre la vitesse instantanée (Vᵢ) et la vitesse cible (V_{c}), et
- indiquer une instruction de maintien de la vitesse lorsque la vitesse instantanée (Vᵢ) est comprise entre la première et la seconde valeurs prédéfinies,
et dont les moyens d'indication (22) comportent un panneau d'affichage (24), propre à afficher les instructions de conduite (25, 26, 28, 30), ou un dispositif d'affichage tête haute (34), propre à afficher les instructions de conduite (25, 26, 28, 30) dans un champ de vision du conducteur,
et **caractérisé en ce que** les moyens d'indication (22) sont configurés pour :
• afficher un pictogramme d'instruction d'augmentation de la vitesse lorsque la vitesse instantanée (Vᵢ) est inférieure à une première valeur prédéfinie, le pictogramme d'instruction d'augmentation de la vitesse comprenant l'indicateur de valeur variable, formé par un élément de hauteur variable en fonction de la différence entre la vitesse instantanée (Vᵢ) et la vitesse cible (V_{c}), et
• afficher un pictogramme d'instruction de réduction de la vitesse lorsque la vitesse instantanée (Vᵢ) est supérieure à une seconde valeur prédéfinie, le pictogramme d'instruction de réduction de la vitesse comprenant l'indicateur de valeur variable, formé par un élément de hauteur variable en fonction de la différence entre la vitesse instantanée (Vᵢ) et la vitesse cible (V_{c}).

2. Dispositif d'aide à la conduite (10) selon la revendication 1, dans lequel les moyens de comparaison (20) comparent la vitesse instantanée (Vᵢ) avec un intervalle entourant la vitesse cible (V_{c}), délimité par les première et seconde valeurs prédéfinies, et les moyens d'indication d'instructions de conduite (22) sont configurés pour :
- afficher le pictogramme (26) d'instruction d'augmentation de la vitesse lorsque la vitesse instantanée (Vᵢ) est en dessous de l'intervalle,
- afficher le pictogramme (30) d'instruction de réduction de la vitesse lorsque la vitesse instantanée (Vᵢ) est au-dessus de l'intervalle,
- afficher un pictogramme (28) d'instruction de maintien de la vitesse lorsque la vitesse instantanée (Vᵢ) se trouve dans l'intervalle.

3. Dispositif d'aide à la conduite (10) selon la revendication 2, dans lequel les moyens d'indication (22) sont configurés pour que :
- le pictogramme d'instruction d'augmentation de la vitesse présente une première couleur,
- le pictogramme d'instruction de maintien de la vitesse présente une seconde couleur différente de la première,
- le pictogramme d'instruction de réduction de la vitesse présente une troisième couleur, différente de la seconde, et de préférence différente de la première.

4. Dispositif d'aide à la conduite (10) selon l'une quelconque des revendications précédentes, dans lequel les moyens d'indication (22) sont configurés pour que :
- le pictogramme d'instruction d'augmentation de la vitesse comporte une flèche orientée vers le haut, et
- le pictogramme d'instruction de réduction de la vitesse comporte une flèche orientée vers le bas.

5. Dispositif d'aide à la conduite (10) selon l'une quelconque des revendications précédentes, dans lequel les moyens d'indication (22) sont configurés pour que :
- lorsque le pictogramme d'instruction d'augmentation de la vitesse est affiché, l'indicateur de valeur variable est la flèche orientée vers le haut, la longueur de la flèche dépendant de la différence entre la vitesse instantanée (Vᵢ) et la vitesse cible (V_{c}), et
- lorsque le pictogramme d'instruction de réduction de la vitesse est affiché, l'indicateur de valeur variable est la flèche orientée vers le bas, la longueur de la flèche dépendant de la différence entre la vitesse instantanée (Vᵢ) et la vitesse cible (V_{c}).

6. Dispositif d'aide à la conduite (10) selon l'une quelconque des revendications précédentes, dans lequel les moyens d'indication (22) sont configurés pour que :
- le pictogramme d'instruction d'augmentation de la vitesse comporte une jauge de vitesse (25), affichant la vitesse instantanée (Vᵢ) et la vitesse cible (V_{c}), l'indicateur de valeur variable étant la distance entre la vitesse instantanée (Vᵢ) et la vitesse cible (V_{c}) affichées,
- le pictogramme d'instruction de réduction de la vitesse comporte une jauge de vitesse (25), affichant la vitesse instantanée (Vᵢ) et la vitesse cible (V_{c}), l'indicateur de valeur variable étant la distance entre la vitesse instantanée (Vᵢ) et la vitesse cible (V_{c}) affichées.

7. Dispositif d'aide à la conduite (10) selon l'une quelconque des revendications précédentes, dans lequel les moyens d'indication (22) comportent des moyens haptiques (36) agissant sur un levier (16) de commande de traction/freinage du véhicule ferroviaire, l'indicateur de valeur variable étant l'effort de résistance transmis par les moyens haptiques.

8. Dispositif d'aide à la conduite (10) selon l'une quelconque des revendications précédentes, dans lequel les moyens de comparaison (20) comparent également la vitesse instantanée (Vᵢ) avec une vitesse maximale (Vₘₐₓ), et les moyens d'indication d'instructions de conduite (22) sont configurés pour indiquer une instruction impérative (32) de réduction de la vitesse lorsque la vitesse instantanée (Vᵢ) est supérieure à la vitesse maximale (Vₘₐₓ).

9. Procédé d'aide à la conduite d'un véhicule ferroviaire, à l'aide d'un dispositif d'aide à la conduite (10) selon l'une quelconque des revendications précédentes, qui comporte :
- une étape de détermination d'une vitesse cible (V_{c}),
- une étape de comparaison d'une vitesse instantanée (Vᵢ) du véhicule ferroviaire avec la vitesse cible (V_{c}) ou un intervalle entourant la vitesse cible, et
- une étape d'indication d'instruction de conduite à destination d'un conducteur du véhicule ferroviaire, lesdites instructions de conduite comportant des instructions de modification de la vitesse instantanée (Vᵢ) en vue de l'approcher de la vitesse cible (V_{c}), de sorte que :
- lorsque la vitesse instantanée (Vᵢ) est inférieure à une première valeur prédéfinie, on indique une instruction d'augmentation de la vitesse, l'instruction d'augmentation de la vitesse comportant un indicateur de valeur variable en fonction de la différence entre la vitesse instantanée (Vᵢ) et la vitesse cible (V_{c}),
- lorsque la vitesse instantanée (Vᵢ) est supérieure à une seconde valeur prédéfinie, on indique une instruction de réduction de la vitesse, l'instruction de réduction de la vitesse comportant un indicateur de valeur variable en fonction de la différence entre la vitesse instantanée (Vᵢ) et la vitesse cible (V_{c}), et
- lorsque la vitesse instantanée (Vᵢ) est comprise entre la première et la seconde valeurs prédéfinies, on indique une instruction de maintien de la vitesse.

## Patentansprüche

1. Vorrichtung (10) zum Unterstützen beim Fahren für ein Schienenfahrzeug, aufweisend Mittel (12) zum Ermitteln einer Zielgeschwindigkeit (V_{c}), welche aufweist:
- Mittel (20) zum Vergleichen einer Momentangeschwindigkeit (Vᵢ) des Schienenfahrzeugs mit der Zielgeschwindigkeit (V_{c}) oder mit einem die Zielgeschwindigkeit umgebenden Intervall, und
- progressive Mittel (22) zur Angabe von Fahranweisungen an einen Fahrer des Schienenfahrzeuges, wobei die Fahranweisungen Anweisungen (25, 26, 28, 30) zum Verändern der Momentangeschwindigkeit (Vᵢ) angesichts deren Annäherung an die Zielgeschwindigkeit (V_{c}) aufweisen, wobei die Mittel zur Angabe ausgebildet sind zum:
- Angeben einer Anweisung zum Erhöhen der Geschwindigkeit, wenn die Momentangeschwindigkeit (Vᵢ) kleiner als ein erster vordefinierter Wert ist, wobei die Anweisung zum Erhöhen der Geschwindigkeit einen Indikator mit in Abhängigkeit von der Differenz zwischen der Momentangeschwindigkeit (Vᵢ) und der Zielgeschwindigkeit (V_{c}) variablem Wert aufweist,
- Angeben einer Anweisung zum Verringern der Geschwindigkeit, wenn die Momentangeschwindigkeit (Vᵢ) größer als ein zweiter vordefinierter Wert ist, wobei die Anweisung zum Verringern der Geschwindigkeit einen Indikator mit in Abhängigkeit von der Differenz zwischen der Momentangeschwindigkeit (Vᵢ) und der Zielgeschwindigkeit (V_{c}) variablem Wert aufweist, und
- Angeben einer Anweisung zum Beibehalten der Geschwindigkeit, wenn die Momentangeschwindigkeit (Vᵢ) zwischen dem ersten und dem zweiten vordefinierten Wert liegt,
und deren Mittel zur Angabe (22) eine Anzeigetafel (24), welche dazu geeignet ist, die Fahranweisungen (25, 26, 28, 30) anzuzeigen, oder eine Head-Up-Anzeigeeinrichtung (34), welche dazu geeignet ist, die Fahranweisungen (25, 26, 28, 30) im Sichtfeld des Fahrers anzuzeigen, aufweisen,
und **gekennzeichnet dadurch, dass** die Mittel zur Angabe (22) ausgestaltet sind zum:
• Anzeigen eines Piktogramms einer Anweisung zum Erhöhen der Geschwindigkeit, wenn die Momentangeschwindigkeit (Vᵢ) kleiner als ein erster vordefinierter Wert ist, wobei das Piktogramm einer Anweisung zum Erhöhen der Geschwindigkeit den Indikator mit variablem Wert aufweist, welcher durch ein Element mit in Abhängigkeit von der Differenz zwischen der Momentangeschwindigkeit (Vᵢ) und der Zielgeschwindigkeit (Vc) variabler Höhe gebildet ist, und
• Anzeigen eines Piktogramms einer Anweisung zum Verringern der Geschwindigkeit, wenn die Momentangeschwindigkeit (Vᵢ) größer als ein zweiter vordefinierter Wert ist, wobei das Piktogramm einer Anweisung zum Verringern der Geschwindigkeit den Indikator mit variablem Wert aufweist, welcher durch ein Element mit in Abhängigkeit von der Differenz zwischen der Momentangeschwindigkeit (Vᵢ) und der Zielgeschwindigkeit (V_{c}) variabler Höhe gebildet ist.

2. Vorrichtung zum Unterstützen beim Fahren (10) gemäß dem Anspruch 1, wobei die Mittel zum Vergleichen (20) die Momentangeschwindigkeit (Vᵢ) mit einem die Zielgeschwindigkeit (V_{c}) umgebenden Intervall, welches durch den ersten und den zweiten vordefinierten Wert begrenzt ist, vergleichen und die Mittel zur Angabe von Fahranweisungen (22) ausgestaltet sind zum:
- Anzeigen des Piktogramms (26) der Anweisung zum Erhöhen der Geschwindigkeit, wenn die Momentangeschwindigkeit (Vᵢ) unterhalb des Intervalls ist,
- Anzeigen des Piktogramms (30) der Anweisung zum Verringern der Geschwindigkeit, wenn die Momentangeschwindigkeit (Vᵢ) oberhalb des Intervalls ist,
- Anzeigen des Piktogramms (28) der Anweisung zum Beibehalten der Geschwindigkeit, wenn die Momentangeschwindigkeit (Vᵢ) sich innerhalb des Intervalls befindet.

3. Vorrichtung zum Unterstützen beim Fahren (10) gemäß dem Anspruch 2, wobei die Mittel zur Angabe (22) so ausgestaltet sind, dass:
- das Piktogramm der Anweisung zum Erhöhen der Geschwindigkeit eine erste Farbe aufweist,
- das Piktogramm der Anweisung zum Verringern der Geschwindigkeit eine zweite Farbe aufweist, welche von der ersten verschieden ist,
- das Piktogramm der Anweisung zum Beibehalten der Geschwindigkeit eine dritte Farbe aufweist, welche von der zweiten verschieden ist und bevorzugt von der ersten verschieden ist.

4. Vorrichtung zum Unterstützen beim Fahren (10) gemäß irgendeinem der vorhergehenden Ansprüche, wobei die Mittel zur Angabe (22) so ausgestaltet sind, dass:
das Piktogramm der Anweisung zum Erhöhen der Geschwindigkeit einen nach oben gerichteten Pfeil aufweist, und
- das Piktogramm der Anweisung zum Verringern der Geschwindigkeit einen nach unten gerichteten Pfeil aufweist.

5. Vorrichtung zum Unterstützen beim Fahren (10) gemäß irgendeinem der vorhergehenden Ansprüche, wobei die Mittel zur Angabe (22) so ausgestaltet sind, dass:
- wenn das Piktogramm der Anweisung zum Erhöhen der Geschwindigkeit angezeigt wird, der Indikator mit variablem Wert der nach oben gerichtete Pfeil ist, wobei die Länge des Pfeils von der Differenz zwischen der Momentangeschwindigkeit (Vᵢ) und der Zielgeschwindigkeit (V_{c}) abhängig ist, und
- wenn das Piktogramm der Anweisung zum Verringern der Geschwindigkeit angezeigt wird, der Indikator mit variablem Wert der nach unten gerichtete Pfeil ist, wobei die Länge des Pfeils von der Differenz zwischen der Momentangeschwindigkeit (Vᵢ) und der Zielgeschwindigkeit (V_{c}) abhängig ist.

6. Vorrichtung zum Unterstützen beim Fahren (10) gemäß irgendeinem der vorhergehenden Ansprüche, wobei die Mittel zur Angabe (22) so ausgestaltet sind, dass:
- das Piktogramm der Anweisung zum Erhöhen der Geschwindigkeit eine Geschwindigkeitsanzeige (25) aufweist, welche die Momentangeschwindigkeit (Vᵢ) und die Zielgeschwindigkeit (V_{c}) anzeigt, wobei der Indikator mit variablem Wert der Abstand zwischen der Momentangeschwindigkeit (Vᵢ) und der Zielgeschwindigkeit (V_{c}), welche angezeigt werden, ist,
- das Piktogramm der Anweisung zum Verringern der Geschwindigkeit eine Geschwindigkeitsanzeige (25) aufweist, welche die Momentangeschwindigkeit (Vᵢ) und die Zielgeschwindigkeit (V_{c}) anzeigt, wobei der Indikator mit variablem Wert der Abstand zwischen der Momentangeschwindigkeit (Vᵢ) und der Zielgeschwindigkeit (V_{c}), welche angezeigt werden, ist.

7. Vorrichtung zum Unterstützen beim Fahren (10) gemäß irgendeinem der vorhergehenden Ansprüche, wobei die Mittel zur Angabe (22) haptische Mittel (36), welche auf einen Hebel (16) zum Steuern des Antriebs/der Bremse des Schienenfahrzeugs wirken, aufweisen, wobei der Indikator mit variablem Wert die Widerstandskraft, welche durch die haptischen Mittel übertragen wird, ist.

8. Vorrichtung zum Unterstützen beim Fahren (10) gemäß irgendeinem der vorhergehenden Ansprüche, wobei die Mittel zum Vergleichen (20) ebenso die Momentangeschwindigkeit (Vi) mit einer Maximalgeschwindigkeit (Vₘₐₓ) vergleichen, und wobei die Mittel zur Angabe von Fahranweisungen (22) dazu eingerichtet sind, eine zwingende Anweisung (32) zur Verringerung der Geschwindigkeit anzugeben, wenn die Momentangeschwindigkeit (Vᵢ) größer als die Maximalgeschwindigkeit (Vₘₐₓ) ist.

9. Verfahren zum Unterstützen beim Fahren eines Schienenfahrzeugs unter Verwendung einer Vorrichtung zum Unterstützen beim Fahren (10) gemäß irgendeinem der vorstehenden Ansprüche, welches aufweist:
- einen Schritt des Ermittelns einer Zielgeschwindigkeit (V_{c}),
- einen Schritt des Vergleichens einer Momentangeschwindigkeit (Vᵢ) des Schienenfahrzeugs mit der Zielgeschwindigkeit (V_{c}) oder einem die Zielgeschwindigkeit umgebenden Intervall,
- einen Schritt des Angebens einer Fahranweisung an einen Fahrer des Schienenfahrzeugs, wobei die Fahranweisungen Anweisungen zum Verändern der Momentangeschwindigkeit (Vᵢ) angesichts deren Annäherung an die Zielgeschwindigkeit (V_{c}) derart aufweisen, dass:
- wenn die Momentangeschwindigkeit (Vᵢ) kleiner als ein erster vordefinierter Wert ist, eine Anweisung zum Erhöhen der Geschwindigkeit angegeben wird, wobei die Anweisung zum Erhöhen der Geschwindigkeit einen Indikator mit in Abhängigkeit von der Differenz zwischen der Momentangeschwindigkeit (Vᵢ) und der Zielgeschwindigkeit (V_{c}) variablem Wert aufweist,
- wenn die Momentangeschwindigkeit (Vᵢ) größer als ein zweiter vordefinierter Wert ist, eine Anweisung zum Verringern der Geschwindigkeit angegeben wird, wobei die Anweisung zum Verringern der Geschwindigkeit einen Indikator mit in Abhängigkeit von der Differenz zwischen der Momentangeschwindigkeit (Vᵢ) und der Zielgeschwindigkeit (V_{c}) variablem Wert aufweist, und
- wenn die Momentangeschwindigkeit (Vᵢ) zwischen dem ersten und dem zweiten vordefinierten Wert liegt, eine Anweisung zum Beibehalten der Geschwindigkeit ausgegeben wird.

## Claims

1. A driving assistance device (10) for a railway vehicle, comprising means (12) for determining a target speed (V_{c}), including:
- means (20) for comparing an instantaneous speed (Vᵢ) of the railway vehicle with the target speed (V_{c}) or with an interval around the target speed, and
- progressive means (22) for indicating driving instructions for a conductor of the railway vehicle, said driving instructions including instructions (25, 26, 28, 30) for modifying the instantaneous speed (Vᵢ) in order to bring it closer to the target speed (V_{c}), the indicating means being configured to:
- indicate an instruction to increase the speed when the instantaneous speed (Vᵢ) is below a first predefined value, the instruction to increase the speed including an indicator with a variable value depending on the difference between the instantaneous speed (Vᵢ) and the target speed (V_{c}),
- indicate an instruction to decrease the speed when the instantaneous speed (Vᵢ) is above a second predefined value, the instruction to decrease the speed including an indicator with a variable value depending on the difference between the instantaneous speed (Vᵢ) and the target speed (V_{c}), and
- indicate an instruction to maintain the speed when the instantaneous speed (Vᵢ) is comprised between the first and second predefined values,
and wherein the indicating means (22) include a display panel (24), able to display the driving instructions (25, 26, 28, 30), or a head-up display device (34), able to display the driving instructions (25, 26, 28, 30) in a field of view of the driver,
and **characterized in that** the indicating means (22) are configured to:
• display an icon for an instruction to increase the speed when the instantaneous speed (Vᵢ) is below a first predefined value, the icon for the instruction to increase the speed comprising the variable value indicator, formed by an element with a variable height depending on the difference between the instantaneous speed (Vᵢ) and the target speed (V_{c}), and
• display an icon for an instruction to decrease the speed when the instantaneous speed (Vᵢ) is above a second predefined value, the icon for the instruction to decrease the speed comprising the variable value indicator, formed by an element with a variable height depending on the difference between the instantaneous speed (Vᵢ) and the target speed (V_{c}).

2. The driving assistance device (10) according to claim 1, wherein the comparison means (20) compare the instantaneous speed (Vᵢ) with an interval surrounding the target speed (V_{c}), defined by the first and second predefined values, and the indicating means for driving instructions (22) are configured to:
- display the icon (26) for the instruction to increase the speed when the instantaneous speed (Vᵢ) is below the interval,
- display the icon (30) for the speed reduction instruction when the instantaneous speed (Vᵢ) is above the interval,
- display a speed maintenance instruction icon (28) when the instantaneous speed (Vᵢ) is in the interval.

3. The driving assistance device (10) according to claim 2, wherein the indicating means (22) are configured so that:
- the speed increase instruction icon has a first color,
- the speed maintenance instruction icon has a second color different from the first,
- the speed reduction instruction icon has a third color, different from the second, and preferably different from the first.

4. The driving assistance device (10) according to any one of the preceding claims, wherein the indicating means (22) are configured so that:
- the speed increase instruction icon has an arrow pointing upward, and
- the speed decrease instruction icon has an arrow pointing downward.

5. The driving assistance device (10) according to any one of the preceding claims, wherein the indicating means (22) are configured so that:
- when the speed increase instruction icon is displayed, the variable value indicator is the arrow pointing upward, the length of the arrow depending on the difference between the instantaneous speed (Vᵢ) and the target speed (V_{c}), and
- when the speed decrease instruction icon is displayed, the variable value indicator is the arrow pointing downward, the length of the arrow depending on the difference between the instantaneous speed (Vᵢ) and the target speed (V_{c}).

6. The driving assistance device (10) according to any one of the preceding claims, wherein the indicating means (22) are configured so that:
- the speed increase instruction icon includes a speed gauge (25), displaying the instantaneous speed (Vᵢ) and the target speed (V_{c}), the variable value indicator being the distance between the displayed instantaneous speed (Vᵢ) and target speed (V_{c}).
- the speed decrease instruction icon includes a speed gauge (25), displaying the instantaneous speed (Vᵢ) and the target speed (V_{c}), the variable value indicator being the distance between the displayed instantaneous speed (Vᵢ) and target speed (V_{c}).

7. The driving assistance device (10) according to any one of the preceding claims, wherein the indicating means (22) include haptic means (36) acting on a traction/braking control lever (16) of the railway vehicle, the variable value indicator being the resisting force transmitted by the haptic means.

8. The driving assistance device (10) according to any one of the preceding claims, wherein the comparison means (20) also compare the instantaneous speed (Vᵢ) with a maximum target speed (Vₘₐₓ), and the driving instruction indicating means (22) are configured to indicate a mandatory speed reduction instruction (32) when the instantaneous speed (Vᵢ) is higher than the maximum speed (Vₘₐₓ).

9. A driving assistance method for a railway vehicle, using a driving assistance device (10) according to any one of the preceding claims, including:
- a step for determining a target speed (V_{c}),
- a step for comparing an instantaneous speed (Vᵢ) of the railway vehicle with the target speed (V_{c}) or with an interval around the target speed, and
- a step for indicating driving instructions for a conductor of the railway vehicle, said driving instructions including instructions for modifying the instantaneous speed (Vᵢ) in order to bring it closer to the target speed (V_{c}), such that:
- when the instantaneous speed (Vᵢ) is below a first predefined value, a speed increase instruction is indicated, the speed increase instruction including an indicator with a variable value depending on the difference between the instantaneous speed (Vᵢ) and the target speed (V_{c}),
- when the instantaneous speed (Vᵢ) is above a second predefined value, a speed decrease instruction is indicated, the speed decrease instruction including an indicator with a variable value depending on the difference between the instantaneous speed (Vᵢ) and the target speed (V_{c}), and
- when the instantaneous speed (Vᵢ) is comprised between the first and second predefined values, a speed maintenance instruction is indicated.
